# EUROPEAN PATENT APPLICATION

(11) **EP 3 106 036 A1**
(43) Date of publication of application: **21.12.2016**
(21) Application number: 16175254.8
(22) Date of filing: 20.06.2016
(51) Int. Cl.: A23L 2/02, A23B 7/154, A23L 19/00

(54) **METHOD AND ENRICHMENT KIT FOR THE UPGRADING FOR HUMAN CONSUMPTION OF FRESH PRODUCE, IN PARTICULAR VEGETABLES OR FRUIT**

(30) Priority: 19.06.2015 NL 2014998
(71) Applicant: van den Einden, Adrianus W.M.C., 5715 BM Lierop (NL)
(72) Inventor: van den Einden, Adrianus W.M.C., 5715 BM Lierop (NL)
(74) Representative: Jilderda, Anne Ayolt

(57) **Abstract**

In a method for upgrading for human consumption of fresh produce, in particular vegetables or fruit, an enriching agent is added to the fresh produce and the fresh produce with the enriching agents is processed to an end product ready for human consumption. The enriching agent comprises a chlorophyll-containing vegetable and/or fruit mixture appropriate for the fresh produce with a basic component which is formed by a minimum mass of 35% of at least one chlorophyll-containing vegetable. The fresh produce is ground together with the mixture, optionally with the addition of a liquid, to form a drinkable mass. The mixture is particularly supplied and applied here as enrichment kit in a packaging.

## Description

The present invention relates to a method for upgrading for human consumption fresh produce, in particular vegetables or fruit, wherein an enriching agent is added to the fresh produce and the fresh produce with the enriching agent is processed to an end product ready for human consumption. The invention also relates to an enrichment kit applicable as enrichment means in such a method.

An estimated one third of worldwide food production is wasted. This amounts to 1.3 billion tons of food a year with a value of 1 trillion dollars. With about 38% the European consumer is by far the most wasteful. Then comes agriculture (23%), the catering industry (14%), processing and storage (12%), supermarkets (9%) and the food industry (5%). In the western world the waste is partly a consequence of a throwaway mentality among consumers and of overproduction. Even in developing countries much food is wasted as a result of harvests not being brought in on time, poor storage and slow transport. The world population will increase in the period up to 2050 by about 30% from 7 to 9 billion. The greatest challenge for the food industry is to continue providing food for all. The UN Food and Agriculture Organization (FAO) predicts that production must increase by 60% from the level of 2006 in order to be able to feed the 2 billion extra people. Only 20% more usable land is however available. According to the FAO, 842 million people are suffering from hunger at this moment. This amounts to one in every eight people. The world produces 4,600 kilocalories per day per person in the world, although 2,000 kilocalories would be sufficient. 1,400 kilocalories of this is wasted. With a quarter of the food wasted in Europe and the USA everyone who is at this moment food insecure could be fed.

A great deal could also be done on microscale here by the individual consumer. Research has shown that the Netherlands is the most wasteful of all European countries, with 541 kg per head of the population over the whole chain, followed by Belgium (345 kg), Cyprus (327 kg) and Estonia (265 kg). In 2012 the total amount of wastage in the Netherlands was between 1.7 and 2.6 billion kg. Of this, consumers waste 800 million kg per year. Households purchase 368 kg of solid foods per inhabitant per year. 19 kg falls under unavoidable food loss, the remaining 349 kg is edible. About 14% of edible food is wasted, i.e. 47 kg per inhabitant, and in the order of 105 kg per household, annually. The Dutch consumer throws away per year edible food worth about €2.5 billion. This is about €340 per household per year. Per person more than €150. Single-person households, families with (young) children and young people under 25 years of age are relatively the most wasteful.

In addition to these humanitarian and financial considerations, food wastage moreover has an impact on the environment. It takes energy and raw materials to produce, transport, process, package, store and optionally prepare food. Food remnants of consumers are difficult to recover and reuse for high-quality purposes because they are mixed with other waste. Substantially all discarded food ends up in a large mountain of household waste and is incinerated.

The present invention has for its object, among others, to take up the above stated challenge in order to reduce food wastage. The invention is based on the insight here that a significant part of the food wastage is formed by fresh products, such as particularly vegetables and fruit, which are subject to degradation when they lose freshness, and therefore become less attractive for consumption.

In order to contribute toward the stated object the invention provides a method of the type stated in the preamble which is characterized according to the invention in that the enriching agent comprises a chlorophyll-containing vegetable and/or fruit mixture appropriate for the fresh produce with a basic component which is formed by a minimum mass of 35% of at least one chlorophyll-containing vegetable, and that the fresh produce is ground together with the mixture, optionally with the addition of a liquid, to form a drinkable mass.

Leaf green or chlorophyll is the green leaf pigment of plants which is present in chloroplasts and using which they absorb light and convert the energy therefrom to chemical energy used for photosynthesis. The green colour of chlorophyll can be attributed to the strong absorption it displays in the red and blue part of the spectrum. Only the green colour is reflected. A vegetable containing chlorophyll is therefore recognizable from a predominantly fresh green to dark green colour of the leaf caused by this specific, characteristic light absorption of the chlorophyll present therein. In the context of the invention a chlorophyll-rich leaf vegetable is preferably applied as chlorophyll-containing component in the enrichment kit.

The method is particularly suitable here for combination with vegetables or fruit which has become overripe, or has wilted, due to a lack of freshness. The invention can however also be advantageously applied with fresh produce which, through inadequate growth, has not reached a fully desired development, such as for instance unintentionally shaped (curved) cucumbers and carrots, strangely shaped fruit or fruit, fruits and vegetables affected by insects or in other manner.

The invention is based on the further insight that suchlike and other traces of degradation are camouflaged particularly well by processing the fresh produce to a drinkable mass by adding the chlorophyll-containing mixture according to the invention. Overripe fruit even impart an added value thereto due to a high sugar content, while the content of the chlorophyll-containing component according to the invention is able to adequately camouflage signs of discoloration and an overripe aroma of the fresh produce.

The mixture is appropriate for the fresh produce here in the sense that the combination of the mixture and the relevant fresh product or a given combination of fresh products in an intended proportion will give a pleasant taste sensation for a majority of a target group. The consumer hereby has a ready-made solution for processing for consumption fresh products which have become overripe or otherwise degraded and which would otherwise be thrown away. Also further along the food supply chain, particularly for supermarkets and farmers, the invention has the advantage that fresh produce which, mainly due to a purely external defect, would otherwise no longer be sellable, can in combination with the mixture according to the invention nevertheless be offered for consumption as ecologically-friendly alternative to waste.

A preferred embodiment of the method according to the invention has the feature that the chlorophyll-containing vegetable comprises at least one vegetable from a group of kale variants, endive variants, spinach variants and broccoli. Because of their relatively high chlorophyll content these vegetables provide an extremely good camouflage for the fresh produce which may possibly have been subject to some degradation. Furthermore, the consumption of these vegetables generally perceived as being particularly healthy is thus enhanced, which may prove an advantage among the (very) young. In a particular embodiment the method according to the invention is characterized here in that the mixture is formed by a mass of 65% to 85% of the basic component. The mixture applied according to the invention thus consists for the major part of healthy vegetables.

In a further preferred embodiment the method according to the invention is characterized in that, in addition to the basic component, the mixture comprises an enriching component which imparts a distinct change in colour, flavour, aroma and/or nutritional value to the end product. The addition of such an enriching component gives a surprising emphasis or twist to the final end product. A particular embodiment of the method according to the invention has in this respect the feature that the enriching component comprises at least one plant from a group of cress, garden rocket, sorrel, fresh herbs, celery, fennel, cucumber, carrot, beetroot, wherein the fresh herbs more particularly comprise one or more herbs taken from a group of parsley, chive, basil, mint and thyme, and the cress comprises at least one cress variety from a group comprising land cress, watercress, red mustard cress and red veined sorrel.

The specific choice from this group of ingredients depends on the specific nature of the fresh produce combined therewith. There is sufficient choice here to find a suitable mix for diverse fresh products. In a further preferred embodiment the method according to the invention is characterized here in that the enriching component is present in a mass of 10% to 30% in the mixture. Such a proportion is found to be sufficient for creating flavour in the end product, while enough of the basic component of the mixture is present to process the fresh produce to a healthy and pleasant end product.

A further preferred embodiment of the method according to the invention has the feature that, in addition to the basic component and the enriching component, the mixture comprises a superfood component which supplements the mixture to a mass of 100%, and more particularly that the superfood component comprises at least one product from a group comprising seeds, wheatgrass, bee pollen, algae, cacao, moringa leaf, baobab powder, hyaluronan, aloe vera, coconut and optionally dried berries. Superfood is a collective term for a series of edible plants and fruits rich in essential nutrients such as proteins, minerals, vitamins, enzymes, antioxidants, polysaccharides, essential fatty acids and essential amino acids. These nutrients are very important for the functioning of the human body, but are hardly to be found anymore in the usual present-day diet in the western world. This explains why superfoods are on the rise in the western world as supplement to daily consumption. Above stated superfood products are preferably applied here which are free of pesticides, chemicals and (growth) hormones.

Superfood seeds which can be applied particularly well in the context of the method according to the invention are the seeds comprising a group of linseed, hempseed and chia seed. Algae comprising a group of chlorella, irish moss, AFA blue green algae, phytoplankton and spirulina are particularly suitable for inclusion in the mixture processed according to the method with the fresh produce to form a drinkable mass. When superfood berries are applied herein, these are preferably taken according to the invention from a group of goji berries, inca berries, cranberries, schizandra berries and acai berries.

The invention also relates to an enrichment kit for upgrading for human consumption fresh produce, in particular vegetables or fruit, comprising the mixture as applied in the above described method according to the invention in a packaging. Such a kit makes it exceptionally easy for a consumer to process fresh produce he/she may already have in the home to a healthy and tasty smoothie. All he/she then requires for this purpose is a suitable blender or grinder with which the content of the kit can be processed together with the fresh produce to form a homogenous liquid mass, optionally with addition of a liquid such as milk or water in order to impart a desired viscosity thereto. A preferred embodiment of the enrichment kit according to invention has the feature here that the packaging comprises an indication of at least one fresh product for which the mixture is appropriate.

The invention will now be further elucidated on the basis of several exemplary embodiments.

**Exemplary embodiment I**

| | | | | | |
|---|---|---|---|---|---|
| Fresh product | : | **banana** | | | |
| Enrichment kit | : | A total of 270 g in foil or a plastic container packed airtightly under a protective atmosphere and with the following content: | | | |
| - chlorophyll-containing vegetable | | | : | 200 g (74%) | kale |
| - enriching components | | | : | 50 g (18.5%) | parsley |
| | | | | 20 g (7.5%) | linseed |
| Optional | : | 4 dates | | | |
| Liquid | : | 400 ml apple juice | | | |

The above described enrichment kit is specifically appropriate for fresh produce such as banana. In the present exemplary embodiment an enrichment kit of 270 g is applied per two overripe bananas. The enrichment kit is portioned in this measured quantity and supplied in an airtight package under a protective atmosphere in this quantity for direct use for specific fresh products. These fresh products are indicated as such on the package of the enrichment kit, either as image or as text, or as combination thereof.

In order to make overripe bananas attractive again for consumption, the bananas are cut into large pieces and placed in a blender. The above stated enrichment kit is added thereto together with about 400 ml apple juice, freshly pressed or from a pack as desired. The mixture can optionally be supplemented with four dates to taste. The whole is ground at high speed for several minutes to a homogeneous, creamy beverage mass (smoothie). If desired, water, yoghurt, milk or other liquid can be added to the mixture instead of apple juice in order to decrease the viscosity and thereby enhance drinkability, in addition to a possible addition of flavour this brings about.

An enrichment kit of the stated content is found in practice to be sufficient for around 350 g banana, this amounting to roughly two bananas. The user is however at liberty to apply more or less fresh product per enrichment kit depending on his or her personal taste. Bananas which have become less attractive for direct consumption because they are overripe, and which for this reason would often be thrown away, can thus still be upgraded to a tasty and healthy product.

**Exemplary embodiment II**

| | | | | | |
|---|---|---|---|---|---|
| Fresh product | : | **pineapple** | | | |
| Enrichment kit | : | A total of 270 g in foil or a plastic container packed airtightly under a protective atmosphere and with the following content: | | | |
| - chlorophyll-containing vegetable | | | : | 100 g (37%) | spinach |
| - enriching components | | | : | 150 g (55.5%) | fennel |
| | | | | 20 g (7.5%) | oats |

The enrichment kit is supplied in a transparent cup and applied with one or more of the indicated fresh products in the manner as described with reference to exemplary embodiment I, wherein the juice of about 8 juicing oranges is added as liquid. The oranges do not have to be fresh and the juice therefrom also serves to enable pouring of the end product.

**Exemplary embodiment III**

| | | | | | |
|---|---|---|---|---|---|
| Fresh product | : | **apple, banana, kiwi** | | | |
| Enrichment kit | : | A total of 270 g in foil or a plastic container packed airtightly under a protective atmosphere and with the following content: | | | |
| - chlorophyll-containing vegetable | | | : | 200 g (74%) | endive |
| - enriching components | | | : | 50 g (18.5%) | celery |
| | | | | 20 g (7.5%) | hempseed |

The enrichment kit is applied with one or more of the indicated fresh products in the manner as described with reference to exemplary embodiment I, making use of three pieces taken from a group of overripe apples, kiwis and bananas. Water, yoghurt, milk or other liquid can optionally be added to the mixture in order to decrease the viscosity, and thereby enhance the pourable nature of the final smoothie.

**Exemplary embodiment IV**

| | | | | | |
|---|---|---|---|---|---|
| Fresh product | : | **banana, mango, passion fruit** | | | |
| Liquid | : | 400 ml apple juice | | | |
| Enrichment kit | : | A total of 260 g in foil or a plastic container packed airtightly under a protective atmosphere and with the following content: | | | |
| - chlorophyll-containing vegetable | | | : | 200 g (77%) | turnip tops |
| - enriching components | | | : | 50 g (19%) | parsley |
| | | | | 10 g (4%) | pollen grains |

The enrichment kit is applied with one or more of the indicated fresh products in the manner as described with reference to exemplary embodiment I, making use of 4 passion fruits, 1 overripe banana and 1 overripe mango. Freshly pressed juice or juice from a bottle or pack can be applied for the apple juice. Orange juice, water, yoghurt, milk or other liquid can also be added to the mixture instead of apple juice in order to decrease the viscosity, and thereby enhance the pourable nature of the final smoothie.

**Exemplary embodiment V**

| | | | | |
|---|---|---|---|---|
| Fresh product | : | **orange** | | |
| Enrichment kit | : | A total of 270 g in foil or a plastic container packed airtightly under a protective atmosphere and with the following content: | | |
| - chlorophyll-containing vegetable | | | : 200 g (74%) | spinach |
| - enriching components | | | : 50 g (18.5%) | parsley |
| - superfood | | | : 20 g (7.5%) | chia seed |
| Optional | : | 100 g raspberries | | |
| | : | 200 g blueberries/bilberries | | |

The enrichment kit is applied with the juice of about 8 oranges in the manner as described with reference to exemplary embodiment II. If desired, a quantity of the fruits stated as optional can be added to taste. Neither the oranges nor the optionally added fruits need be wholly fresh or unblemished and are camouflaged in effective manner by the flavour and colour of the enrichment kit applied therewith according to the invention.

The ideal outcome in all the above described exemplary embodiments of the enrichment kit according to the invention is that a ready-to-use packaging is supplied to a user/consumer in which three product components are always included in a measured quantity and mutual ratio, viz:
I. A basic component of the product formed by chlorophyll-containing crops such as a spinach variant, a kale variant or an endive variant. There are in addition other varieties of these crops; the invention is not limited to the above stated examples. This basic component form 65%-85% of the filling weight of the packaging.
II. An enriching component of a second product to give a surprising emphasis to, or enrich, the properties of the final smoothie, such as colour, flavour, nutritional value and other properties. Suitable for this purpose are for instance (variants of) land cress, garden rocket, red mustard, red sorrel, sorrel, various other baby leaf variants (flat leaf) parsley, celery, fennel, cucumber, carrot, beetroot, sorrel, fresh herbs, celery, fennel, cucumber, carrot, beetroot, chive, mint, thyme and other fresh herbs. Depending on the specific end product, this component will form 10%-30% of the filling weight of the packaging.
III. A superfood to give the properties of the smoothie an extra boost. These are for instance diverse seeds, grains and beans, such as linseed, hempseed, chai seed, oats, oatmeal, lupin flour and cacao, but also bee pollen, diverse algae such as chlorella, irish moss and spirulina, and different fruits and berries such as goji berries. The packaging is filled with these products to 100% of the overall filling weight.

Although the invention has been further elucidated on the basis of only the foregoing exemplary embodiments, it will be apparent that the invention is by no means limited thereto. On the contrary, many variations and embodiments are still possible for a person with ordinary skill in the art without departing from the scope of the invention.

## Claims

1. Method for upgrading for human consumption fresh produce, in particular vegetables or fruit, wherein an enriching agent is added to the fresh produce and the fresh produce with the enriching agents is processed to an end product ready for human consumption, **characterized in that** the enriching agent comprises a chlorophyll-containing vegetable and/or fruit mixture appropriate for the fresh produce with a basic component which is formed by a minimum mass of 35% of at least one chlorophyll-containing vegetable, and that the fresh produce is ground together with the mixture, optionally with the addition of a liquid, to form a drinkable mass.

2. Method as claimed in claim 1, **characterized in that** the chlorophyll-containing vegetable comprises at least one vegetable from a group of kale variants, endive variants, spinach variants, turnip tops and broccoli.

3. Method as claimed in claim 1 or 2, **characterized in that** the mixture is formed by a mass of 65% to 85% of the basic component.

4. Method as claimed in one or more of the foregoing claims, **characterized in that**, in addition to the basic component, the mixture comprises an enriching component which imparts a distinct change in colour, flavour, aroma and/or nutritional value to the end product.

5. Method as claimed in claim 4, **characterized in that** the enriching component comprises at least one plant from a group of cress, garden rocket, sorrel, fresh herbs, celery, fennel, cucumber, carrot, beetroot.

6. Method as claimed in claim 5, **characterized in that** the fresh herbs comprise one or more herbs taken from a group of parsley, chive, basil, mint and thyme.

7. Method as claimed in claim 5, **characterized in that** the cress comprises at least one cress variety from a group comprising land cress, watercress, red mustard cress and red veined sorrel.

8. Method as claimed in claim 5, 6 or 7, **characterized in that** the enriching component is present in a mass of 10% to 30% in the mixture.

9. Method as claimed in claim 8, **characterized in that**, in addition to the basic component and the enriching component, the mixture comprises a superfood component which supplements the mixture to a mass of 100%.

10. Method as claimed in claim 9, **characterized in that** the superfood component comprises at least one product from a group comprising seeds, wheatgrass, bee pollen, algae, cacao, moringa leaf, baobab powder, hyaluronan, aloe vera, coconut and optionally dried berries.

11. Method as claimed in claim 10, **characterized in that** the seeds comprise a group of linseed, hempseed and chia seed.

12. Method as claimed in claim 10, **characterized in that** the algae comprise a group of chlorella, irish moss, AFA blue green algae, phytoplankton and spirulina.

13. Method as claimed in claim 10, **characterized in that** the berries comprise a group of goji berries, inca berries, cranberries, schizandra berries and acai berries.

14. Enrichment kit for upgrading for human consumption fresh produce, in particular vegetables or fruit, comprising the mixture as applied in the method as claimed in one or more of the foregoing claims in a packaging.

15. Enrichment kit as claimed in claim 14, **characterized in that** the packaging comprises an indication of at least one fresh product for which the mixture is appropriate.
